(19) **Europäisches Patentamt / European Patent Office / Office européen des brevets**

(11) **EP 1 558 053 B1**

(12) **FASCICULE DE BREVET EUROPEEN**

(45) Date de publication et mention
de la délivrance du brevet:
**08.08.2007   Bulletin 2007/32**

(51) Int Cl.:
*H04Q 7/38* *(2006.01)*

(21) Numéro de dépôt: **05290158.4**

(22) Date de dépôt: **24.01.2005**

(54) **Adaptation dynamique de la détection de demandes d'accés à un réseau cellulaire de communications, en fonction de l'environnement radio associé à l'équipement de communication demandeur**

Dynamische Anpassung der Detektion von Zugriffanforderungen auf ein Mobilfunknetz abhänging von der Funkumgebung des anfordernden Komunikationsendgeräts

Dynamic adaptation of the detection of the access demands to a cellular communication network, depending on the radio environment associated with the access demand communication device

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.01.2004   FR 0400770**

(43) Date de publication de la demande:
**27.07.2005   Bulletin 2005/30**

(73) Titulaire: **Evolium S.A.S.**
**75008 Paris (FR)**

(72) Inventeurs:
 • **Gabriel, Anne**
  **92320 Chatillon (FR)**
 • **Agin, Pascal**
  **92320 Chatillon (FR)**

(74) Mandataire: **El Manouni, Josiane**
**Alcatel Lucent**
**Intellectual Property & Standards**
**54 rue La Boétie**
**75008 Paris (FR)**

(56) Documents cités:
**US-A1- 2001 026 543      US-A1- 2003 076 852**

• **OKADA K ET AL: "A DYNAMIC CHANNEL ASSIGNMENT STRATEGY USING INFORMATION ON SPEED AND MOVING DIRECTION FOR MICRO CELLULAR SYSTEMS" IEICE TRANSACTIONS ON COMMUNICATIONS, INSTITUTE OF ELECTRONICS INFORMATION AND COMM. ENG. TOKYO, JP, vol. E79-B, no. 3, 1 mars 1996 (1996-03-01), pages 279-288, XP000588451 ISSN: 0916-8516**

**Description**

L'invention concerne le domaine des réseaux cellulaires de communications, et plus particulièrement la détection des demandes d'accès à de tels réseaux.

Dans certains réseaux du type précité, comme par exemple les réseaux comportant un accès ALOHA dit « à tranches d'accès » (ou « slotted »), les terminaux de communications ne peuvent transmettre leurs messages que pendant des intervalles de temps autorisés par le réseau.

Plus précisément, lorsqu'un terminal demandeur souhaite accéder au réseau, il doit transmettre, par exemple à la station de base dont il dépend au sein dudit réseau, des signaux représentatifs d'un préambule définissant une demande d'accès en vue de transmettre un message associé.

Par exemple dans le cas d'un réseau de type UMTS, le terminal transmet un préambule avec une signature, choisie de façon aléatoire parmi des signatures autorisées (elles-mêmes choisies par le réseau parmi U = 16 signatures, par exemple), dans un canal physique à accès aléatoire spécifique, appelé PRACH (pour « Physical Random Access Channel ») et dans une tranche temporelle d'accès (ou « access slot ») de largeur prédéfinie. Par exemple, dans un réseau à accès aléatoire de type slotted ALOHA le préambule s'étend sur une durée égale à 4096 chips, la largeur d'une tranche d'accès est égale à 5120 chips (ce qui correspond à 1,3 ms), et 15 tranches temporelles d'accès subdivisent périodiquement des intervalles de temps de 20 ms (correspondant à deux trames radio de 10 ms).

Pour une description de la procédure d'accès par un terminal à un réseau de type UMTS, on pourra par exemple se référer au document US 2001/0026543.

Le message, qui est associé à un préambule transmis, ne peut être transmis au réseau par le terminal demandeur qu'à condition que ledit préambule ait été effectivement acquitté par le réseau, et plus précisément par l'un de ses équipements de gestion de demandes d'accès, comme par exemple une station de base (ou Node B). Le terminal demandeur envoie la partie message associée au préambule PRACH lorsque l'équipement de gestion de demandes d'accès a détecté la présence du terminal qui l'a émis et lorsque le terminal a reçu de l'équipement, sur le canal AICH (pour « Acquisition Indicator Channel ») un message d'acquittement dans un délai d'acquittement prédéfini.

Si le terminal demandeur n'a pas reçu de message d'acquittement dans le délai d'acquittement prédéfini (et configurable), il ré-émet un autre préambule dans une tranche d'accès, éventuellement différente de la précédente, avec une puissance supérieure à celle utilisée pour le préambule précédent.

Le nombre de préambules pouvant être émis consécutivement et la périodicité d'émission des préambules sont prédéfinis et configurables. Ils sont diffusés périodiquement par le réseau aux terminaux situés dans sa zone de couverture. De même, la cartographie des tranches d'accès pendant lesquelles les terminaux sont autorisés à émettre leurs préambules est configurable et diffusée périodiquement aux terminaux situés dans la zone de couverture du réseau. La référence de temps de chaque station de base est également diffusée périodiquement par le réseau sur un canal de synchronisation dédié aux terminaux situés dans leurs zones de couverture (ou cellules) respectives.

Afin qu'une station de base puisse déterminer la présence d'un terminal demandeur, elle effectue une procédure de détection pour chaque signature autorisée par le réseau dans la cellule qu'elle gère, consistant, pour chaque tranche temporelle d'accès autorisée par le réseau dans ladite cellule, à corréler chaque signal reçu à un instant candidat de réception d'un préambule, appartenant à une fenêtre temporelle d'analyse de largeur W, à des codes de préambule conjugués complexes, correspondant à la signature considérée, puis à le traiter, notamment par élévation au carré, afin de déterminer une énergie de corrélation associée, en vue d'une prise de décision.

Pour une fenêtre temporelle d'analyse de largeur W chips et en l'absence de sur-échantillonnage (osf = 1), on a W instants qui sont candidats de réception d'un préambule pour une tranche temporelle d'accès considérée et pour une signature considérée. Sur l'ensemble de la fenêtre temporelle d'analyse on peut donc effectuer jusqu'à W corrélations. Une première corrélation est effectuée entre le signal reçu et le préambule, une deuxième corrélation peut être effectuée entre le signal reçu et le préambule décalé de 1 chip, ..., et une W-ième corrélation peut être effectuée entre le signal reçu et le préambule décalé de (W-1) chips.

Pour une fenêtre temporelle d'analyse de largeur W chips et en présence d'un facteur de sur-échantillonnage (osf > 1) on a (W x osf) instants qui sont candidats de réception d'un préambule pour une tranche temporelle d'accès considérée et pour une signature considérée. Sur l'ensemble de la fenêtre temporelle d'analyse on peut donc effectuer jusqu'à (W x osf) corrélations. Une première corrélation est effectuée entre le signal reçu et le préambule, une deuxième corrélation peut être effectuée entre le signal reçu et le préambule décalé de 1 chip / osf, une deuxième corrélation peut être effectuée entre le signal reçu et le préambule décalé de 2 chip / osf, etc.

La largeur W de la fenêtre temporelle d'analyse dépend notamment de la distance séparant une station de base de la frontière la plus éloignée de la cellule qu'elle contrôle. Par exemple, on peut choisir une fenêtre temporelle d'analyse d'une largeur W égale à environ 608 chips pour détecter un terminal mobile distant d'environ 20 km de la station de base dont il dépend.

Comme le sait l'homme de l'art, le nombre d'erreurs de détection de préambule effectuées par une station de base dépend de certains paramètres du canal radio, utilisé par un terminal demandeur placé dans sa zone de couverture radio (ou cellule), lesquels dépendent de l'environnement dans lequel évolue ledit terminal demandeur. Chaque station de base étant configurée de façon statique pour l'ensemble de sa zone de couverture radio (ou cellule), elle utilise les mêmes paramètres de détection pour tous les terminaux mobiles qui sont situés dans sa cellule, alors que les paramètres de détection optimaux varient en fonction du terminal mobile considéré et de son environnement radio. Chaque erreur de détection entraînant la retransmission d'un préambule (avec une puissance supérieure à la précédente), le temps de connexion d'un terminal demandeur peut donc varier en fonction de son environnement. En outre, le niveau d'interférence au sein d'une cellule peut être accru lorsqu'elle couvre une zone dans laquelle les terminaux peuvent présenter des comportements sensiblement différents.

L'invention a donc pour but de remédier à l'inconvénient précité.

Elle propose à cet effet un dispositif de traitement de signaux, par exemple pour une station de base d'un réseau cellulaire de communications (à accès aléatoire), ce dispositif comprenant des moyens de traitement chargés d'effectuer une détection de préambule sur chaque signal transmis par un terminal demandeur pendant l'une des tranches temporelles d'accès autorisées et représentatif d'un préambule de demande d'accès au réseau associé à l'une des signatures autorisées, en fonction de paramètres de détection.

Ce dispositif de traitement se caractérise par le fait que ses moyens de traitement sont chargés, à réception d'un signal de demande d'accès au réseau transmis par un terminal demandeur, de déterminer une valeur d'utilisation pour un (ou plusieurs) paramètre(s) de détection choisi(s) en fonction de la valeur d'au moins un paramètre choisi représentatif de l'environnement radio du terminal demandeur, de manière à adapter la détection du signal reçu de façon dynamique en fonction de l'environnement radio du terminal demandeur.

On entend ici par « paramètre de l'environnement radio » tout paramètre susceptible d'influencer le canal radio utilisé par un terminal demandeur pour transmettre sa demande d'accès au réseau à un instant donné. Par conséquent, il pourra s'agir, par exemple, de la vitesse (estimée) du terminal demandeur, de la vitesse moyenne des terminaux mobiles qui sont placés dans la cellule dans laquelle est situé le terminal demandeur, de l'effet doppler perçu par la station de base réceptrice (par exemple) et associé au signal émis par le terminal demandeur, de l'amplitude et/ou de la phase de trajets multiples induits par des obstacles fixes ou en mouvement, ou du type d'environnement (habitation, routier, autoroutier) dans lequel est situé le terminal demandeur.

Par ailleurs, les moyens de traitement peuvent comprendre des moyens de détection chargés d'estimer la valeur de chaque paramètre d'environnement choisi. En variante, le dispositif peut comprendre des moyens de détection couplés aux moyens de traitement et chargés d'estimer la valeur de chaque paramètre d'environnement choisi.

Ces moyens de détection peuvent être chargés d'analyser le signal reçu de manière à estimer la valeur de la vitesse du terminal demandeur. En variante ou en complément, les moyens de détection peuvent être chargés de déduire de données d'information et/ou de signaux dédiés transmis par le terminal demandeur et/ou par des terminaux, présents dans la cellule dans laquelle est situé le terminal demandeur, la valeur d'au moins un paramètre d'environnement choisi. Ainsi, le paramètre d'environnement choisi peut être, par exemple, la vitesse moyenne des terminaux mobiles qui sont placés dans la cellule dans laquelle est situé le terminal demandeur.

Par ailleurs, les moyens de traitement peuvent être agencés pour effectuer leur détection pour chaque signature autorisée :

- en corrélant, pour chacune des tranches temporelles d'accès autorisées, chaque signal reçu à des codes dits de préambule, correspondant à chacune des signatures autorisées,
- puis en calculant, à chaque instant candidat de réception d'un préambule, l'énergie qui est associée à chaque segment de traitement dont le nombre M est au moins égal à un et constitue un paramètre de détection,
- puis en calculant à chaque instant candidat la somme des énergies calculées des segments,
- puis, en déterminant à l'intérieur d'une fenêtre temporelle d'analyse le maximum des sommes d'énergie calculées, et
- en comparant le maximum énergétique déterminé à un seuil choisi formant un autre paramètre de détection, le préambule étant alors considéré comme détecté, avec la signature et la tranche temporelle d'accès associées, lorsque le maximum énergétique qui lui correspond est supérieur au seuil.

Les étapes mentionnées ci-dessus sont les principales étapes de la détection, nécessaires à la compréhension de l'invention. Mais, comme le sait l'homme de l'art, d'autres étapes de traitement complètent généralement ces étapes principales, comme par exemple le filtrage en réception.

Le nombre de segments M est corrélé à la longueur L des segments. Par exemple, lorsque M = 1, L = 4096 chips, ou lorsque M = 2, L = 2048 chips, ou encore lorsque M = 4, L = 1024 chips, etc.

En variante, les moyens de traitement peuvent être agencés pour effectuer leur détection pour chaque signature :

- en corrélant, pour chacune des tranches temporelles d'accès autorisées, chaque signal reçu à des codes dits de préambule, correspondant à chacune des signatures autorisées,

- puis en calculant, à chaque instant candidat de réception d'un préambule, l'énergie qui est associée à chaque segment de traitement dont le nombre est au moins égal à un et constitue un paramètre de détection,

- puis en calculant à chaque instant candidat la somme des énergies calculées des segments, et en comparant cette somme d'énergie (associée à un instant contenu dans une fenêtre temporelle d'analyse), à un seuil choisi formant un autre paramètre de détection, de manière à décider que le préambule est détecté, avec la signature et la tranche temporelle d'accès associées, lorsque la somme d'énergie présente une valeur supérieure au seuil, à l'intérieur de la fenêtre temporelle d'analyse considérée.

Grâce à cette variante, on n'a pas nécessairement besoin d'analyser tous les instants de la fenêtre temporelle d'analyse. En effet, dès que l'on détecte le dépassement du seuil à un instant de la fenêtre on considère que le préambule est détecté, si bien que l'on arrête l'analyse sur le reste de la fenêtre.

Dans l'un ou l'autre cas, les paramètres de détection adaptables sont préférentiellement choisis parmi le nombre de segments utilisé dans le calcul de l'énergie (et la longueur associée) et le seuil (dit de préambule) utilisé dans la comparaison. Par exemple, le nombre de segments et/ou le seuil sont adaptables.

En outre, le dispositif peut comprendre une mémoire stockant une table de correspondance entre des valeurs de paramètre(s) d'environnement et des valeurs de paramètre(s) de détection. Dans ce cas, les moyens de traitement sont agencés pour déterminer chaque valeur de paramètre de détection à utiliser par comparaison entre chaque valeur de paramètre d'environnement déterminée et au moins un ensemble, suffisamment représentatif, de valeurs de paramètre(s) d'environnement stockées dans la table de correspondance.

Dans un mode de réalisation particulier la mémoire peut par exemple stocker une table de correspondance entre au moins des valeurs d'intervalles de vitesse, des valeurs de nombre de segments (et les longueurs associées) et des valeurs de seuil de préambule. Mais, la table pourrait n'établir qu'une correspondance entre des valeurs d'intervalles de vitesse et des valeurs de nombre de segments (et les longueurs associées), la valeur de seuil étant alors fixée, ou bien entre des valeurs d'intervalles de vitesse et des valeurs de seuil de préambule, la valeur de nombre de segments (et la longueur associée) étant alors fixées.

Certaines valeurs de paramètres de détection, pouvant éventuellement alimenter la table de correspondance et associées à une valeur (ou un ensemble de valeurs) d'au moins un paramètre d'environnement radio, peuvent être transmises à un dispositif de traitement selon l'invention par le réseau, et notamment par le contrôleur de réseau radio (ou RNC), auquel est couplée la station de base dans laquelle il est éventuellement implanté, ou par un centre d'exploitation et de maintenance du réseau cellulaire (ou OMC pour « Operation and Maintenance Centre »). Dans ce cas, le dispositif peut comprendre des moyens de configuration chargés de fournir aux moyens de traitement des valeurs de paramètre(s) de détection correspondant à différentes valeurs d'au moins un paramètre d'environnement.

L'invention propose également, d'une première part, une station de base, pour un réseau cellulaire de communications, équipée d'une partie au moins d'un dispositif de traitement du type de celui présenté ci-avant, d'une deuxième part, un équipement de contrôle, pour un réseau cellulaire de communications, équipé d'une partie au moins d'un dispositif de traitement du type de celui présenté ci-avant, et d'une troisième part, un centre d'exploitation et de maintenance (ou OMC), pour un réseau cellulaire de communications, comprenant au moins des moyens de configuration d'un dispositif de traitement du type de celui présenté ci-avant.

L'invention est particulièrement bien adaptée, bien que de façon non exclusive, au domaine des communications radio, terrestres 3GPP et/ou satellitaires, et notamment aux réseaux de type W-CDMA, CDMA 2000, IS95, UMTS et GSM/GPRS, ainsi qu'au domaine des communications optiques par fibres optiques.

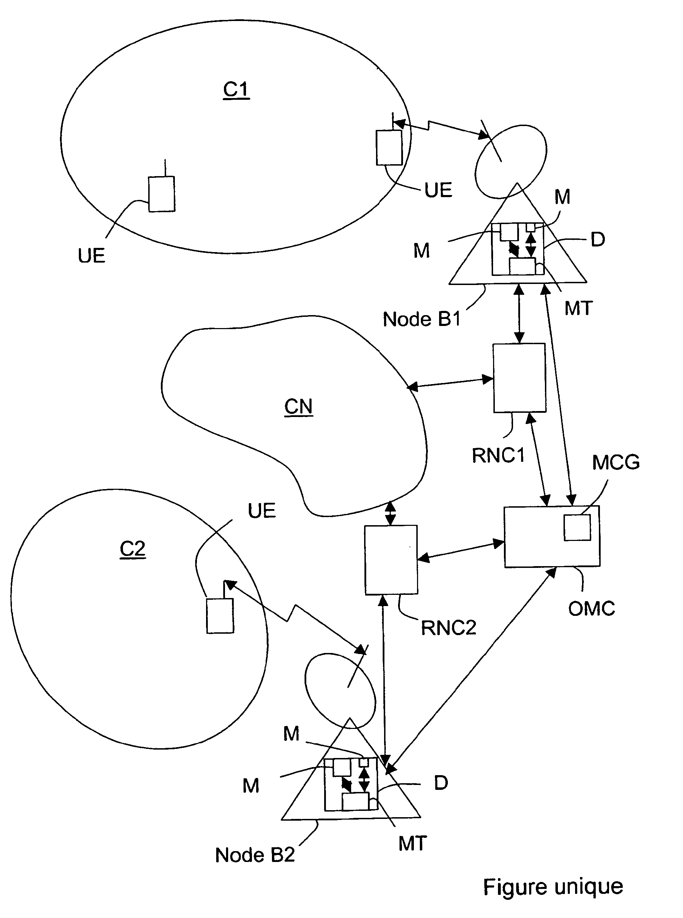

D'autres caractéristiques et avantages de l'invention apparaîtront à l'examen de la description détaillée ci-après, et du dessin annexé, sur lequel l'unique figure illustre de façon schématique un exemple de réalisation d'une partie d'un réseau de communications de type UMTS comprenant des stations de base (Node Bs) munies d'un dispositif de traitement de signaux selon l'invention. Le dessin annexé pourra non seulement servir à compléter l'invention, mais aussi contribuer à sa définition, le cas échéant.

L'invention a pour objet de permettre l'adaptation des performances de la procédure de détection de préambules (ou demandes d'accès à un réseau à accès aléatoire), émis par des terminaux de communication, en fonction de leurs environnements radio respectifs.

Dans la description qui suit, on entend par « terminal de communication » tout équipement de réseau capable d'échanger des données sous la forme de signaux, soit avec un autre équipement, via leur(s) réseau(x) de rattachement, soit avec son propre réseau de rattachement. Il pourra donc s'agir, par exemple, d'équipements d'utilisateurs, tels que des ordinateurs fixes ou portables, des téléphones portables, ou des assistants personnels numériques (ou PDA), ou bien de serveurs.

On considère par ailleurs dans ce qui suit, à titre d'exemple illustratif, que le réseau de communications dispose d'un mécanisme d'accès de type slotted ALOHA, présenté dans la partie introductive. Mais, l'invention n'est pas limitée à ce seul type de réseau. Elle concerne en effet tous les réseaux de communications, auxquels des terminaux de communication peuvent accéder grâce à une procédure d'accès aléatoire reposant sur l'émission d'un préambule (ou demande d'accès) pendant des tranches temporelles d'accès (ou « access slots »). Ainsi, l'invention concerne les réseaux de communications à accès aléatoire, éventuellement de type satellitaire, comme par exemple les réseaux W-CDMA, CDMA 2000, IS95, UMTS et GSM/GPRS.

Dans ce qui suit, on considère, à titre d'exemple illustratif, que les terminaux sont des équipements d'utilisateurs (UE) de type téléphone portable, rattachés à un réseau cellulaire de communications de type 3G, tel qu'un réseau UMTS, et fonctionnant selon le mode dit de duplexage en fréquence (ou FDD pour « Frequency Division Duplex ») ou le mode dit de duplexage temporel (ou TDD pour « Time Division Duplex »).

Comme illustré sur l'unique figure, un réseau UMTS peut, d'une façon très schématique mais néanmoins suffisante à la compréhension de l'invention, être résumé à un coeur de réseau (ou « Core Network » (CN)) couplé à un réseau d'accès radio (UTRAN).

Le réseau d'accès radio comporte une ou plusieurs stations de base appelées Node Bs et raccordées au Core Network CN par un ou plusieurs noeuds RNC (ou « Radio Network Controller »).

Dans l'exemple illustré, le réseau UMTS comprend deux stations de base Node B1 et Node B2 respectivement raccordées au Core Network CN par des noeuds RNC1 et RNC2. Par ailleurs, dans cet exemple chaque station de base Node B1, Node B2 est associée à une unique cellule C1, C2 couvrant une zone radio dans laquelle peuvent se trouver un ou plusieurs équipements d'utilisateurs UE.

Classiquement chaque Node Bi (i=1, 2) est chargé du traitement du signal et notamment de la gestion des demandes d'accès au réseau UMTS effectuées par les équipements d'utilisateurs UE qui sont situés dans la cellule Ci qu'il contrôle

Dans ce type de réseau à accès aléatoire, comme indiqué dans la partie introductive, lorsqu'un terminal UE souhaite communiquer un message contenant des données, il doit, lors de son premier accès au réseau, transmettre une demande d'accès (ou préambule) à la station de base Node Bi qui contrôle la cellule Ci dans laquelle il est situé. Pour ce faire, le terminal UE génère un préambule accompagné d'une signature qui, dans le cas d'un accès de type slotted ALOHA, s'étend sur une durée de D chips, par exemple D = 4096 chips. La signature est choisie de façon aléatoire parmi des signatures autorisées. Dans le cas d'un réseau UMTS, U = 16 signatures peuvent être utilisées pendant chaque tranche temporelle d'accès AS, sachant que le nombre total N de tranches temporelles d'accès AS est égal à 15. Mais, le nombre de signatures et le nombre de tranches temporelles d'accès AS qui peuvent être utilisés dans chaque cellule est fixé par le réseau. Ces nombres sont diffusés dans chaque cellule par le réseau. Par conséquent, un terminal ne considère pas 16 signatures et 15 tranches temporelles d'accès AS, mais uniquement ceux que le réseau l'a autorisé à considérer.

Le terminal UE transmet alors le préambule, sous la forme d'un signal radio, au Node Bi dont il dépend, en utilisant un canal physique à accès aléatoire dédié, appelé PRACH (pour « Physical Random Access Channel ») et dans l'une des tranches temporelles d'accès ASn autorisées.

Lorsque le Node Bi reçoit le signal représentatif de la demande d'accès (ou préambule), il met en oeuvre un mécanisme d'acquittement (ou de détection) destiné à détecter la présence du terminal demandeur UE afin de lui transmettre un message d'acquittement l'autorisant à transmettre les données du message associé au préambule détecté qu'il a précédemment transmis.

Plus précisément, le mécanisme d'acquittement consiste à rechercher toutes les signatures dans toutes les tranches temporelles d'accès AS de manière à déduire la signature (s) qui a été utilisée par chaque terminal demandeur UE.

Dans un réseau UMTS, l'échelle de temps est décomposée en intervalles de 20 ms qui se décomposent eux-mêmes en 15 tranches d'accès AS0 à AS14. Mais, bien entendu, d'autres décompositions sont envisageables.

Si toutes les informations (ASn et s) ont bien été déterminées, que la signature utilisée s est une signature autorisée, et que le Node Bi est prêt à recevoir le message associé au préambule détecté, il génère une information d'acquittement $AI_s$ dont la valeur est égale à +1. Si le Node Bi ne détecte pas de signature, il génère une information d'acquittement $AI_s$ dont la valeur est égale à 0. Enfin, si le Node Bi détecte une signature mais qu'il ne souhaite pas, ou ne peut pas, recevoir le message associé (par exemple parce qu'il ne dispose pas de suffisamment de ressources pour le traiter), il génère une information d'acquittement $AI_s$ dont la valeur est égale à -1.

Le Node Bi transforme ensuite les informations d'acquittement $AI_s$, associées aux signatures s qu'il a détectées dans une tranche temporelle d'accès donnée ASn, en une suite $S_s$ de symboles occupant 4096 chips et constituant un message d'acquittement associé auxdites signatures détectées. Il est rappelé que dans un réseau UMTS chaque tranche d'accès dure 1,3 ms, ce qui correspond à 5120 chips.

Le Node Bi insère alors le message d'acquittement ($S_s$) dans le canal AICH dédié à la transmission des messages d'acquittement, pendant l'une des N=15 tranches d'accès ASn.

Chaque terminal demandeur UE écoutant le canal AICH, il peut en extraire le message d'acquittement qui est associé, notamment, à la signature qu'il avait utilisée pour transmettre son préambule (ou demande d'accès), et déduire de ce message si l'acquittement est effectif ou non.

Comme indiqué dans l'introduction, le terminal UE ne peut transmettre le message associé au préambule précédemment transmis qu'à condition qu'il ait reçu le message d'acquittement pendant le délai d'acquittement pour lequel il est configuré. Si l'acquittement est effectif, mais que le terminal UE a reçu le message d'acquittement en dehors du délai d'acquittement, il ne peut pas envoyer le message associé au préambule précédemment transmis. Il a en fait entre temps transmis une nouvelle fois son préambule en utilisant une nouvelle signature tirée de façon aléatoire, une nouvelle tranche d'accès et une puissance supérieure à celle utilisée pour la transmission du préambule précédent, ou bien abandonné la procédure. De même, si l'acquittement n'est pas effectif, le terminal UE transmet de nouveau son préambule en utilisant une nouvelle signature tirée de façon aléatoire, une nouvelle tranche d'accès et une puissance supérieure à celle utilisée pour la transmission du préambule précédent.

Le mécanisme d'acquittement de préambule (ou procédure de PRACH), présenté schématiquement ci-avant, est défini en détail par les spécifications 3GPP TS 25.211, TS 25.213 et TS 25.214.

Il ressort de ce qui précède que le mécanisme d'acquittement revêt une grande importance, notamment en termes de temps d'accès au réseau pour les terminaux demandeurs UE et de niveau d'interférence. Or, il existe des situations dans lesquelles le mécanisme d'acquittement, également appelé procédure de détection, ne se déroule pas correctement. On parle alors de situations de fausse alarme ou de non détection. Ces situations surviennent avec des probabilités dites de fausse alarme $P_{fa}$ et de non détection $P_{nd}$ qui doivent être les plus faibles possible, quels que soient les environnements radio dans lesquels évoluent les terminaux demandeurs, si l'on souhaite que la détection de préambule PRACH soit performante.

L'invention est donc destinée à adapter dynamiquement les paramètres de la détection en fonction des environnements radio des terminaux demandeurs UE, de sorte que les performances de la détection soient meilleures que dans le cas où les paramètres de détection sont fixes.

Par « environnement radio » on entend tout paramètre susceptible de perturber (ou influencer) directement ou indirectement le canal radio utilisé par un terminal demandeur UE pour transmettre sa demande d'accès au réseau à un instant donné. Il s'agit donc, par exemple, de la vitesse (estimée) du terminal demandeur UE par rapport au Node Bi dont-il dépend, de l'effet doppler associé au signal émis par le terminal demandeur UE lorsqu'il y a un mouvement relatif entre ce dernier et le Node Bi dont-il dépend ou lorsque l'environnement du terminal demandeur UE bouge (par exemple dans le cas du passage d'un véhicule), de l'amplitude et/ou de la phase de trajets multiples induits par des obstacles fixes (comme des bâtiments) ou en mouvement (comme des personnes ou des véhicules), ou du type d'environnement dans lequel est situé le terminal demandeur UE (ville, route nationale ou départementale, autoroute, etc).

On décrit ci-après l'influence de l'environnement radio sur la probabilité de fausse alarme $P_{fa}$ et la probabilité de non détection de préambule $P_{nd}$ (égale à 1 - $P_d$ (probabilité de détection de préambule)), lesquelles permettent d'apprécier les performances de la détection de préambule PRACH.

Deux probabilités de fausse alarme peuvent être identifiées. La première $P_1$ concerne la probabilité qu'une signature différente de celle transmise soit détectée. La seconde $P_2$ concerne la probabilité qu'au moins l'une des 16 signatures soit détectée alors qu'aucun préambule n'a été transmis. Les deux probabilités $P_1$ et $P_2$ étant liées par la relation $P_2 = 1 - (1 - P_1)^{16}$, on ne considérera dans ce qui suit que la première probabilité P1.

La probabilité d'obtenir une fausse alarme dans le cas théorique d'un canal dit AWGN, d'une fenêtre temporelle d'analyse d'une largeur W égale à 1 chip, d'un Node B comportant un nombre $N_{rx}$ d'antennes de réception égal à 2 (j = 1 ou 2), et d'une corrélation sur M segments (M = 1, 2, 4, 8, etc) de longueur L/M (avec L = 4096 chips), est la probabilité conditionnelle que la somme de l'énergie calculée sur les M segments est supérieure au seuil de préambule PT, sachant qu'aucun préambule n'a été transmis. On peut montrer que cette probabilité de fausse alarme $P_{fa}$ est donnée par la relation suivante :

$$P_{fa} = P_{fa}(W = 1, N_{rx} = 2, M)$$

$$P_{fa} = \Pr oba(\frac{1}{M}\sum_{i=0}^{M-1}\left(\left|C_i^{(1)}\right|^2 + \left|C_i^{(2)}\right|^2\right) \geq PT * \sigma^2 \left|aucun\ préambule\ transmis\right)$$

qui peut se réécrire :

$$P_{fa} = \Pr oba(E \geq PT * \sigma^2 \left|aucun\ préambule\ transmis\right)$$

où E est l'énergie de la corrélation, $\sigma^2$ est la variance du bruit thermique (également notée $N_0$), et $C_i^{(j)}$ est l'amplitude de corrélation de la longueur UM, calculée sur le segment numéro i (i = 0, 1, ..., M-1) et pour l'antenne de réception numéro j (ici j = 1 ou 2), qui peut être calculée par la relation mentionnée ci-dessous :

$$C_i^{(j)} = \frac{M}{L} * \sum_{k=i*\frac{L}{M}}^{\left((i+1)*\frac{L}{M}\right)-1} r_i^{(j)} * \overline{C_i}$$

où L est la longueur du préambule en nombre de chips (ici L = 4096), $r_i^{(j)}$ est le signal reçu par l'antenne de réception numéro j, et $\overline{C_i}$ est le conjugué du nombre complexe $C_i$ qui est multiplié par le signal reçu $r_i^{(j)}$ ; $C_i$ étant égal au produit du préambule binaire PRACH par le code de brouillage (« scrambling code ») utilisé pour la transmission du préambule PRACH et par un autre nombre complexe de module égal à 1. Il est important de noter qu'aucun préambule n'étant transmis, le signal reçu par chaque antenne du Node B récepteur est uniquement égal au bruit thermique.

On peut alors montrer que, dans les conditions précitées, la probabilité de fausse alarme $P_{fa}$ peut se reformuler comme suit :

$$P_{fa} = P_{fa}(W = 1, N_{rx} = 2, M) = \exp(-PT * L) * \sum_{k=0}^{2M-1} \frac{1}{k!}(-PT * L)^k$$

On peut également montrer que dans le cas d'un nombre d'antennes de réception $N_{rx}$ quelconque, mais toujours d'une fenêtre temporelle d'analyse d'une largeur W égale à 1 chip, cette relation peut être formulée comme suit :

$$P_{fa} = P_{fa}(W = 1, N_{rx}, M) = \exp(-PT * L) * \sum_{k=0}^{N_{rx}*M-1} \frac{1}{k!}(-PT * L)^k$$

Enfin, on peut généraliser cette dernière formule au cas d'une fenêtre temporelle d'analyse d'une largeur W quelconque, en écrivant :

$$P_{fa} = P_{fa}(W, N_{rx}, M)$$

$$P_{fa} = \mathrm{Pr}oba\left(\exists\, j \in [0;W-1] / Corr(j)^2 \geq \sigma^2 * PT \,|\, aucun\ préambule\ transmis\right)$$

ce qui se réécrit :

$$P_{fa} = 1 - \mathrm{Pr}oba\left(\forall\, j \in [0;W-1] / Corr(j)^2 < \sigma^2 * PT \,|\, aucun\ préambule\ transmis\right)$$

ce qui peut encore se réécrire :

$$P_{fa} = 1 - (1 - P_{fa}(W = 1, N_{rx}, M))^W$$

Il ressort de ces relations que la probabilité de fausse alarme $P_{fa}$ varie essentiellement en fonction de la valeur (en dB) du seuil de préambule PT et du nombre M de segments utilisés. Plus précisément, la probabilité de fausse alarme $P_{fa}$ est d'autant plus faible que le nombre de segment est faible (M = 1) et que le seuil de préambule choisi PT est élevé.

Par ailleurs, on peut montrer que pour une probabilité de fausse alarme $P_{fa}$ fixée, le seuil de préambule PT optimal dépend notamment du nombre de segments M choisi (en fait il dépend de $P_{fa}$, de M et de W). Or, comme on le verra plus loin, pour une probabilité de fausse alarme $P_{fa}$ fixée le nombre de segments M optimal dépend au moins du paramètre d'environnement qu'est la vitesse du terminal demandeur UE. Par conséquent, le seuil de préambule PT optimal dépend également, au moins, du paramètre d'environnement qu'est la vitesse du terminal demandeur UE.

Il en résulte qu'en environnement radio perturbé la procédure de détection est d'autant plus performante que le seuil de préambule PT est élevé.

On se réfère maintenant aux probabilités de détection de préambule $P_d$ et de non détection de préambule $P_{nd}$.

La probabilité de détection $P_d$ est la probabilité qu'une signature transmise avec un préambule soit correctement détectée. La probabilité de non détection $P_{nd}$ est la probabilité qu'une signature transmise avec un préambule ne soit pas détectée. Ces deux probabilités sont liées par la relation $P_{nd} = 1 - P_d$.

La probabilité de détecter un préambule dans le cas théorique d'un canal dit AWGN, d'une fenêtre temporelle d'analyse d'une largeur W égale à 1 chip, d'un Node B comportant un nombre $N_{rx}$ d'antennes de réception égal à 2 (j = 1 ou 2), et d'une corrélation sur M segments (M = 1, 2, 4, 8, etc) de longueur UM (avec L = 4096 chips), est la probabilité conditionnelle que la somme de l'énergie calculée sur les M segments est supérieure au seuil de préambule PT, sachant qu'un préambule a été transmis. On peut montrer que cette probabilité de détection $P_d$ est donnée par la relation suivante :

$$P_d = P_d(W = 1, N_{rx} = 2, M)$$

$$P_d = \mathrm{Pr}\,oba(\frac{1}{M} \sum_{i=0}^{M-1}\left(\left|C_i^{(1)}\right|^2 + \left|C_i^{(2)}\right|^2\right) \geq PT * \sigma^2 | un\ préambule\ a\ été\ transmis)$$

Cette formule reprend les mêmes variables $C_i^{(j)}$ que celles présentées ci-avant, mais cette fois le signal reçu par chaque antenne du Node B récepteur est égal à la somme du signal transmis et du bruit thermique.

On peut alors montrer que la probabilité de détection $P_d$, dans les conditions précitées, peut se reformuler comme suit :

$$P_d = P_d(W = 1, N_{rx} = 2, M) = Q_{2M}\left(2 * \sqrt{\frac{E_C}{\sigma^2} * L}, \sqrt{2 * PT * L}\right)$$

où $Q_m(a,b)$ est la fonction de Marcum généralisée et $E_C$ est l'énergie par chip du signal reçu par le Node B.

On peut également montrer que dans le cas théorique d'un canal dit AWGN et d'un nombre d'antennes de réception $N_{rx}$ quelconque, et quelle que soit la largeur de la fenêtre temporelle d'analyse, la dernière relation peut être remplacée par la formule approchée donnée ci-après, qui est valable uniquement lorsque la probabilité de fausse alarme Pfa sur (W-1) chips est négligeable devant la probabilité de détection sur 1 chip :

$$P_d = P_d(N_{rx}, M) = Q_{N_{rx}M}\left(\sqrt{\frac{E_C}{\sigma^2} * 2 * N_{rx} * L}, \sqrt{2 * PT * L}\right)$$

Il est rappelé que la probabilité de non détection $P_{nd}$ peut-être déduite de la probabilité de détection $P_d$ par la relation $P_{nd} = 1 - P_d$.

Il est important de noter que la probabilité de détection $P_d$ est, dans le cas théorique d'un canal dit AWGN, peu dépendante de la largeur W de la fenêtre temporelle d'analyse, pour des probabilités faibles de fausse alarme $P_{fa}$. Cela résulte du fait que si aucun préambule n'est détecté au niveau du premier chip, alors il n'est pas possible d'améliorer la probabilité de détection en augmentant la largeur W de la fenêtre temporelle d'analyse et par conséquent la probabilité de non détection est la même quelle que soit W. Dans un environnement réaliste, comme par exemple dans le cas d'un terminal UE logé dans un véhicule, la formule approchée mentionnée ci-dessus (valable dans le cas d'un canal AWGN) n'est plus valable. Il n'existe alors pas de relation simple liant W à $P_{nd}$. On peut néanmoins montrer à l'aide de simulations numériques que la probabilité de détection $P_d$ n'est plus indépendante de la largeur W de la fenêtre temporelle d'analyse.

Il ressort des relations présentées ci-avant et des simulations numériques que la probabilité de non détection $P_{nd}$ varie en fonction de la valeur du rapport $E_C/\sigma^2$ (ou $E_C/N_0$), de la largeur W de la fenêtre temporelle d'analyse, du nombre M de segments utilisés et d'au moins un paramètre perturbant (ou influençant) l'environnement radio du terminal demandeur UE, comme par exemple la vitesse du mobile. On peut notamment observer que la probabilité de non détection $P_{nd}$ est d'autant plus faible que le rapport $E_C/\sigma^2$ (ou $E_C/N_0$) est élevé et que le nombre de segment est faible (M = 1).

Dans les simulations numériques, le rapport $E_C/\sigma^2$ représente l'énergie moyenne que le Node B doit recevoir pour atteindre une qualité donnée (par exemple une $P_{nd}$ égale à 1 %), en présence d'un moyennage des effets des variations rapides du canal radio, induit par les paramètres d'environnement. On peut notamment observer que plus le rapport $E_C/\sigma^2$ est grand, plus les variations sont faibles. Par conséquent, en environnement radio perturbé la procédure de détection est d'autant plus performante que le rapport $E_C/\sigma^2$ est élevé. Par ailleurs, on peut noter que pour une $P_{nd}$ égale à 1%, la valeur de $E_C/\sigma^2$ (en dB) varie en fonction du nombre de segments M et de la vitesse du terminal demandeur UE comme suit (les valeurs sont données à titre d'exemple non limitatif) :

| Vitesse de UE (km/h) | M=1 | M=2 | M=4 | M=8 |
|---|---|---|---|---|
| 3 | -18,4 | -17,7 | -16,8 | -15,7 |
| 50 | -18,2 | -17,6 | -16,8 | -15,8 |
| 120 | -17,8 | -17,9 | -17,1 | -16,2 |
| 250 | -16,7 | -18,3 | -17,9 | -17,2 |
| 400 | -14,6 | -17,8 | -18,0 | -17,5 |

Par exemple, lorsque le paramètre d'environnement qui perturbe le canal radio PRACH est la vitesse du terminal demandeur UE, on peut faire les constatations suivantes :

- lorsque la corrélation se fait sur un unique segment (M = 1), il survient une importante dégradation des performances de la détection pour des vitesses comprises entre environ 250 km/h et environ 400 km/h, comparé aux vitesses inférieures,
- comparé au cas M = 1, lorsque la corrélation se fait sur deux segments (M = 2), il survient une petite dégradation des performances de la détection pour des vitesses inférieures à environ 200 km/h, et il n'y a pas de dégradation sensible des performances pour des vitesses comprises entre environ 250 km/h et environ 400 km/h, et
- comparé au cas M = 1, lorsque la corrélation se fait sur un nombre de segments supérieur à deux (M = 4 ou 8), il survient une importante dégradation des performances de la détection pour des vitesses inférieures à environ 200 km/h, une faible dégradation des performances de la détection pour des vitesses comprises entre environ 250 km/h et environ 400 km/h, et aucune dégradation sensible pour des vitesses supérieures à environ 450 km/h.

En d'autres termes :

- M = 1 est un bon compromis pour des vitesses comprises entre 0 km/h et environ 110 km/h,
- M = 2 est un bon compromis pour des vitesses comprises entre environ 110 km/h et environ 350 km/h,
- M = 4 est un bon compromis pour des vitesses comprises entre environ 350 km/h et environ 500 km/h, et
- M = 8 est un bon compromis pour des vitesses supérieures à environ 500 km/h.

En d'autres termes, et comme évoqué précédemment, le nombre optimal de segments M varie au moins en fonction de $P_{nd}$, et du paramètre d'environnement qu'est la vitesse du terminal demandeur UE. En outre, on peut montrer qu'à chaque nombre de segments M correspond une valeur de seuil de préambule PT optimale pour une probabilité de fausse alarme globale fixée, calculée sur les 16 signatures possibles.

Afin de permettre une adaptation des paramètres de détection en fonction de l'environnement radio, l'invention propose d'équiper chaque station de base Node Bi du réseau d'un dispositif D chargé, notamment, du traitement des signaux représentatifs de demandes d'accès (ou préambules).

Il est important de noter qu'un dispositif selon l'invention peut être implanté, au moins partiellement, dans un autre équipement de réseau qu'une station de base, et notamment dans un contrôleur de réseau radio tel qu'un RNC.

Un tel dispositif de traitement D est chargé de mettre en oeuvre le mécanisme d'acquittement (ou procédé de détection) décrit précédemment, mais sous une forme adaptable dynamiquement.

Plus précisément, le dispositif de traitement D, selon l'invention comporte un module de traitement MT couplé au module de réception de signaux du Node Bi dans lequel il est implanté (ou auquel il est couplé).

Ce module de traitement MT est chargé, lorsqu'il reçoit un signal de demande d'accès au réseau transmis par un terminal demandeur, de déterminer une valeur d'utilisation pour au moins un paramètre de détection choisi en fonction de la valeur d'au moins un paramètre choisi représentatif de l'environnement radio du terminal demandeur.

La valeur de chaque paramètre d'environnement radio peut être déterminée soit à réception du signal de demande d'accès, éventuellement en l'analysant, soit antérieurement à cette réception. A cet effet, le module de traitement MT peut comporter un module de détection de paramètre(s) d'environnement, ou bien coopérer avec un module de détection MD appartenant au dispositif D, comme illustré.

Par exemple, le module de détection MD peut être chargé d'analyser le signal reçu de manière à estimer la valeur de la vitesse relative du terminal demandeur UE par rapport au Node Bi dont il dépend. Toute technique connue de l'homme de l'art peut être utilisée à cet effet, y compris des techniques indirectes reposant sur la détermination préalable d'un autre paramètre d'environnement comme par exemple l'effet doppler associé au canal radio. Bien entendu, d'autres paramètres d'environnement peuvent être déterminés à partir du signal reçu, comme par exemple l'amplitude et/ou la phase de trajets multiples, ou le type d'environnement dans lequel est situé le terminal demandeur UE.

En variante ou bien en complément, le module de détection MD peut être chargé de déduire la valeur d'au moins un paramètre d'environnement choisi de données d'information, comme par exemple des mesures locales, et/ou de signaux dédiés, transmis par le terminal demandeur UE et/ou par des terminaux qui sont présents dans la cellule dans laquelle est situé le terminal demandeur UE. Parmi les données d'information et les signaux dédiés utilisables, on peut par exemple citer les bits pilotes du DPCCH d'un ou plusieurs terminaux mobiles, ou d'autres bits des DPCCH ou DPDCH. Par exemple, le paramètre d'environnement choisi peut être la vitesse moyenne des terminaux mobiles qui sont placés dans la cellule dans laquelle est situé le terminal demandeur UE, ou le nombre moyen de trajets multiples dans la cellule, ou encore une variation moyenne du canal radio, comme par exemple la variance.

Il est important de noter que le module de détection MD peut être agencé de manière à déterminer les valeurs de plusieurs paramètres d'environnement de types différents, avant et/ou après la réception d'un signal de demande d'accès. Par ailleurs, le module de détection MD peut être utilisé dans d'autres situations. Il peut ainsi être partagé avec d'autres entités du Node B dans lequel il est implanté, par exemple pour adapter l'estimation de canal en fonction de la vitesse.

Lorsque la valeur du (ou des) paramètre(s) d'environnement a (ont) été déterminée(s) (ou estimée(s)), que ce soit avant et/ou après la réception d'un signal de demande d'accès, le module de traitement MT procède à la détermination de la valeur que l'un au moins des paramètres de détection doit prendre, compte tenu de chaque valeur de paramètre d'environnement déterminée. En d'autres termes, le module de traitement MT adapte dynamiquement la valeur d'un ou plusieurs paramètres de détection choisis en fonction de chaque valeur de paramètre d'environnement déterminée à partir du signal transmis par le terminal demandeur UE. Le nombre de paramètres de détection qui peuvent être adaptés dépend de la configuration du dispositif D, et plus précisément du niveau de constance de performance recherché.

Par « paramètre de détection » on entend ici tout paramètre intervenant dans l'estimation de la probabilité de fausse alarme $P_{fa}$ et/ou de la probabilité de non détection $P_{nd}$, comme par exemple le nombre M de segments (et la longueur de segment L associée) ou le seuil de préambule PT.

Par exemple, le module de traitement MT est agencé pour adapter le nombre M de segments et/ou le seuil de préambule PT.

Deux modes de détermination des valeurs de paramètres d'environnement à utiliser peuvent être envisagés.

Un premier mode consiste à calculer directement les valeurs à partir de formules dérivées de formules de probabilité de fausse alarme $P_{fa}$ et/ou de probabilité de non détection $P_{nd}$, telles que celles présentées ci-avant, ou de formules équivalentes.

Un second mode consiste à déterminer les valeurs dans une table de correspondance stockée dans une mémoire M du dispositif D. Plus précisément, la mémoire M peut stocker une table de correspondance entre des valeurs de paramètre(s) d'environnement et des valeurs de paramètre(s) de détection.

Par exemple, la table établit une correspondance entre des intervalles de vitesse, des nombres de segments M (et les longueurs de corrélation L de chaque segment, associées) et des seuils de préambule PT, comme c'est le cas dans l'exemple fourni ci-dessous.

| Vitesse estimée (km/h) | Nombre de Segments M | Longueur de corrélation L (chips) | Seuil de préambule (dB) |
|---|---|---|---|
| 0 - 109 | 1 | 4096 | - 23,3 |
| 110 - 349 | 2 | 2048 | - 22,3 |
| 350 - 499 | 4 | 1024 | -21,1 |

| ≥ 500 | 8 | 512 | - 19,5 |
|---|---|---|---|

Cet exemple de table fournit quatre jeux de trois paramètres de détection adaptés à quatre environnements radio différents en raison de vitesses de déplacement différentes de terminaux demandeurs UE.

Dans cet exemple, le module de traitement MT est donc configuré de manière à déterminer la valeur estimée de la vitesse du terminal demandeur UE, en coopération avec le module de détection MD, puis à déterminer dans la table de correspondance les valeurs du nombre de segments M, de la longueur de corrélation L et du seuil de préambule PT qui sont stockées en correspondance de l'intervalle de vitesse auquel appartient la valeur estimée de la vitesse.

Bien entendu, la table pourrait n'établir qu'une correspondance entre des intervalles de vitesse et des nombres de segments M (et les longueurs L associées), la valeur du seuil de préambule PT étant alors fixée, ou bien entre des intervalles de vitesse et des valeurs de seuil de préambule PT, la valeur du nombre de segments M (et la longueur L associée) étant alors fixées.

Par ailleurs, la recherche dans la table peut ne porter que sur un ensemble suffisamment représentatif de valeurs de paramètres. Dans ce cas, on extrait de la table la ou les valeurs qui s'y trouvent stockées en correspondance de la valeur « tabulée » qui est la plus proche de la valeur estimée.

En outre, certaines valeurs de paramètres de détection, pouvant éventuellement alimenter la table de correspondance et associées à une valeur (ou un ensemble de valeurs) d'au moins un paramètre d'environnement radio, peuvent être transmises au dispositif de traitement D par le réseau cellulaire, et de préférence par le contrôleur de réseau radio RNC auquel est couplé le Node B dans lequel il est implanté.

En effet, selon la norme UMTS actuelle, chaque RNC fixe le seuil de détection qui est utilisé par chaque Node B qu'il contrôle. Cette information de seuil de détection est transmise au Node B via le protocole NBAP, à l'aide d'un message appelé « common transport channel setup ». Par conséquent, on peut envisager d'adapter la norme UMTS pour qu'un RNC puisse transmettre à un Node B qu'il contrôle (à destination de son dispositif de traitement D), via le protocole NBAP et éventuellement à l'aide du message précité, plusieurs valeurs de paramètre de détection, comme par exemple le seuil de détection ou le nombre de segments M, correspondant à différentes valeurs d'au moins un paramètre caractéristique de l'environnement radio.

Le dispositif de traitement D peut comporter un module de configuration MCG chargé de fournir à un module de traitement MT installé dans un Node B des valeurs de paramètre(s) de détection associées à des valeurs de paramètre (s) d'environnement radio. Ce module de configuration MCG peut être implanté dans un terminal local, de type LMT, que l'on raccorde directement au Node B concerné pour l'alimenter en valeurs.

En variante, on peut implanter le module de configuration MCG dans un centre d'exploitation et de maintenance du réseau cellulaire ou OMC (pour « Operation and Maintenance Centre »). Ce centre OMC est en effet chargé de gérer de façon séparée les Node Bs et les RNCs du réseau GSM. Il est notamment chargé de contrôler l'exploitation et la maintenance des Node Bs soit directement, pour ce qui concerne l'exploitation et la maintenance physique, soit indirectement via leurs RNCs de rattachement, pour ce qui concerne l'exploitation et la maintenance logique. Lorsqu'il est équipé d'un module de configuration MCG, le centre OMC peut donc transmettre à des Node Bs choisis (et éventuellement à des RNCs choisis) des valeurs adaptées à leurs besoins respectifs.

Une fois que le module de traitement MT dispose des paramètres de détection adaptables, nécessaires à la détection du préambule, le module de traitement MT n'a plus qu'à effectuer ladite détection.

Pour ce faire, il commence par corréler, pour chacune des N tranches temporelles d'accès ASn autorisées au sein de la cellule qu'il gère, le signal reçu à des codes de préambule qui correspondent à chacune des signatures autorisées au sein de ladite cellule. Puis, le module de traitement MT calcule, à chaque instant candidat de réception d'un préambule, l'énergie (de la corrélation) qui est associée à chaque segment de traitement, parmi les segments dont le nombre M est éventuellement déterminé à partir du ou des paramètres d'environnement déterminés, s'il s'agit d'un paramètre de détection adaptable. Il calcule ensuite pour chaque instant candidat la somme des énergies des M segments. Puis, il détermine à l'intérieur d'une fenêtre temporelle d'analyse le maximum des sommes d'énergie calculées. Ensuite, le module de traitement MT compare le maximum énergétique déterminé au seuil de préambule PT, éventuellement déterminé à partir du ou des paramètres d'environnement déterminés, s'il s'agit d'un paramètre de détection adaptable. Cela permet de déterminer l'instant précis à l'intérieur de la fenêtre temporelle d'analyse de largeur W où est reçu le préambule. Enfin, le module de traitement MT décide d'acquitter le préambule (c'est-à-dire de le considérer comme détecté), avec les signature s et tranche temporelle d'accès ASn associées, si et seulement si le maximum énergétique déterminé, qui lui correspond, est supérieur au seuil de préambule PT.

Dans une variante, le module de traitement MT commence par corréler le signal reçu, pour chacune des N tranches temporelles d'accès ASn autorisées, à des codes de préambule qui correspondent à chacune des U signatures autorisées. Puis, le module de traitement MT calcule, à chaque instant candidat de réception d'un préambule, l'énergie (de la corrélation) qui est associée à chaque segment de traitement, parmi les segments dont le nombre M est éventuellement déterminé à partir du ou des paramètres d'environnement déterminés, s'il s'agit d'un paramètre de détection adaptable. Il calcule ensuite pour chaque instant candidat la somme des énergies des M segments et la compare au seuil de préambule PT, éventuellement déterminé à partir du ou des paramètres d'environnement déterminés, s'il s'agit d'un paramètre de détection adaptable. Si la somme d'énergie associée à un instant de la fenêtre temporelle d'analyse est inférieure au seuil PT, alors il compare au seuil PT la somme d'énergie associée à l'instant suivant. En revanche dès qu'une somme d'énergie est supérieure au seuil PT, il décide d'acquitter le préambule (c'est-à-dire de le considérer comme détecté), avec les signature s et tranche temporelle d'accès ASn associées. Par conséquent, dès qu'une détection est positive à l'intérieur d'une fenêtre temporelle d'analyse il n'est plus nécessaire de procéder aux comparaisons des sommes d'énergie associées aux instants suivants de la fenêtre temporelle considérée.

Le dispositif de traitement D selon l'invention, et notamment son module de traitement MT, son module de détection MD, son module de configuration MCG et éventuellement sa mémoire M, peuvent être réalisés sous la forme de circuits électroniques, de modules logiciels (ou informatiques), ou d'une combinaison de circuits et de logiciels.

L'invention ne se limite pas aux modes de réalisation de dispositif de traitement et de station de base décrits ci-avant, seulement à titre d'exemple, mais elle englobe toutes les variantes que pourra envisager l'homme de l'art dans le cadre des revendications ci-après.

## Revendications

1.    Dispositif de traitement de signaux (D) pour un réseau cellulaire de communications, ledit dispositif (D) comprenant des moyens de traitement (MT) agencés pour effectuer une détection de préambule sur chaque signal transmis par un terminal demandeur (UE) dans une tranche temporelle d'accès autorisée et représentatif d'un préambule de demande d'accès audit réseau associé à une signature autorisée, en fonction de paramètres de détection, **caractérisé en ce que** lesdits moyens de traitement (MT) sont agencés, à réception d'un signal de demande d'accès au réseau transmis par un terminal demandeur (UE), pour déterminer une valeur d'utilisation pour au moins un paramètre de détection choisi en fonction d'une valeur d'au moins un paramètre choisi représentatif de l'environnement radio dudit terminal demandeur, de manière à adapter dynamiquement la détection dudit signal reçu en fonction de l'environnement radio dudit terminal demandeur (UE).

2.    Dispositif selon la revendication 1, **caractérisé en ce que** ledit paramètre d'environnement est choisi dans un groupe comprenant la vitesse estimée du terminal demandeur (UE), une vitesse moyenne de terminaux mobiles placés dans la cellule dans laquelle est situé ledit terminal demandeur (UE), un effet doppler associé au signal émis par le terminal demandeur (UE), une amplitude de trajets multiples, une phase de trajets multiples, un type d'environnement dans une cellule (C) gérée par une station de base (Node B) dudit réseau.

3.    Dispositif selon l'une des revendications 1 et 2, **caractérisé en ce que** lesdits moyens de traitement (MT) comprennent des moyens de détection (MD) agencés pour estimer la valeur de chaque paramètre d'environnement choisi.

4.    Dispositif selon l'une des revendications 1 et 2, **caractérisé en ce qu'**il comprend des moyens de détection (MD) couplés auxdits moyens de traitement (MT) et agencés pour estimer la valeur de chaque paramètre d'environnement choisi.

5.    Dispositif selon l'une des revendications 3 et 4, **caractérisé en ce que** lesdits moyens de détection (MD) sont agencés pour analyser ledit signal reçu de manière à estimer la valeur de la vitesse du terminal demandeur (UE).

6.    Dispositif selon l'une des revendications 3 à 5, **caractérisé en ce que** lesdits moyens de détection (MD) sont agencés pour déduire de données d'information et/ou de signaux dédiés transmis par ledit terminal demandeur (UE) la valeur d'au moins un paramètre d'environnement choisi.

7.    Dispositif selon l'une des revendications 3 à 5, **caractérisé en ce que** lesdits moyens de détection (MD) sont agencés pour déduire de données d'information et/ou de signaux dédiés transmis par des terminaux, présents dans la cellule dans laquelle est situé ledit terminal demandeur (UE), la valeur d'au moins un paramètre d'environnement choisi.

8.    Dispositif selon la revendication 7, **caractérisé en ce que** ledit paramètre d'environnement choisi est la vitesse moyenne des terminaux mobiles placés dans la cellule dans laquelle est situé ledit terminal demandeur (UE).

9.    Dispositif selon l'une des revendications 1 à 8, **caractérisé en ce que** lesdits moyens de traitement (MT) sont agencés pour effectuer ladite détection pour chaque signature i) par corrélation de chaque signal reçu, pour chacune desdites tranches temporelles d'accès autorisées, à des codes dits de préambule, correspondant à chacune des signatures autorisées, ii) par calcul, à chaque instant candidat de réception d'un préambule, d'une énergie, associée à chaque segment de traitement dont le nombre est au moins égal à un et constitue un paramètre de détection, puis iii) par calcul à chaque instant candidat de la somme desdites énergies calculées des segments, et par comparaison de cette somme d'énergie, associée à un instant contenu dans une fenêtre temporelle d'analyse, à un seuil choisi formant un autre paramètre de détection, de manière à décider que le préambule reçu est détecté, avec les signature et tranche temporelle d'accès associées, lorsque ladite somme d'énergie présente une valeur supérieure audit seuil, à l'intérieur de ladite fenêtre temporelle d'analyse considérée.

10. Dispositif selon l'une des revendications 1 à 8, **caractérisé en ce que** lesdits moyens de traitement (MT) sont agencés pour effectuer ladite détection pour chaque signature i) par corrélation de chaque signal reçu, pour chacune desdites tranches temporelles d'accès autorisées, à des codes dits de préambule, correspondant à chacune des signatures autorisées, ii) par calcul, à chaque instant candidat de réception d'un préambule, d'une énergie associée à chaque segment de traitement dont le nombre est au moins égal à un et constitue un paramètre de détection, puis iii) par calcul à chaque instant candidat de la somme desdites énergies calculées desdits segments, puis iv) par détermination à l'intérieur d'une fenêtre temporelle d'analyse d'un maximum parmi lesdites sommes d'énergie, et v) par comparaison dudit maximum énergétique déterminé à un seuil choisi formant un autre paramètre de détection, le préambule étant considéré comme détecté, avec les signature et tranche temporelle d'accès associées, lorsque ledit maximum énergétique déterminé correspondant est supérieur audit seuil.

11. Dispositif selon l'une des revendications 9 et 10, **caractérisé en ce que** ledit nombre de segments est adaptable.

12. Dispositif selon l'une des revendications 9 à 11, **caractérisé en ce que** ledit seuil est adaptable.

13. Dispositif selon l'une des revendications 1 à 12, **caractérisé en ce qu'**il comprend une mémoire (M) dans laquelle est stockée une table de correspondance entre des valeurs de paramètre(s) d'environnement et des valeurs de paramètre(s) de détection, et **en ce que** lesdits moyens de traitement (MT) sont agencés pour déterminer chaque valeur de paramètre de détection à utiliser par comparaison entre chaque valeur de paramètre d'environnement déterminée et au moins un ensemble choisi de valeurs de paramètre(s) d'environnement stockées dans ladite table de correspondance.

14. Dispositif selon l'une des revendications 5 à 10 en combinaison avec les revendications 11 à 13, **caractérisé en ce que** ladite mémoire (M) stocke une table de correspondance entre au moins des valeurs d'intervalles de vitesse, des valeurs de nombre de segments et des valeurs de seuil.

15. Dispositif selon l'une des revendications 13 et 14, **caractérisé en ce que** ladite mémoire (M) est propre à être alimentée en valeurs de paramètre(s) d'environnement et en valeurs de paramètre(s) de détection associées par un équipement de contrôle (RNC) dudit réseau.

16. Dispositif selon l'une des revendications 1 à 15, **caractérisé en ce que** lesdits moyens de traitement (MT) sont agencés pour recevoir d'un équipement de contrôle (RNC) dudit réseau des valeurs de paramètre(s) de détection correspondant à plusieurs valeurs d'au moins un paramètre d'environnement.

17. Dispositif selon l'une des revendications 1 à 16, **caractérisé en ce qu'**il comprend des moyens de configuration (MCG) agencés pour fournir auxdits moyens de traitement (MT) des valeurs de paramètre(s) de détection correspondant à différentes valeurs d'au moins un paramètre d'environnement.

18. Station de base (Node B) pour un réseau cellulaire de communications, **caractérisée en ce qu'**elle comprend un dispositif de traitement (D) selon l'une des revendications précédentes.

19. Equipement de contrôle (RNC) pour un réseau cellulaire de communications, **caractérisé en ce qu'**il comprend un dispositif de traitement (D) selon l'une des revendications 1 à 17.

20. Centre d'exploitation et de maintenance (OMC) pour un réseau cellulaire de communications, **caractérisé en ce qu'**il comprend au moins des moyens de configuration (MCG) d'un dispositif de traitement (D) selon l'une des revendications 1 à 17.

**Claims**

1. A signal processing device (D) for a cellular communications network, said device (D) comprising processing means (MT) adapted to effect preamble detection, as a function of detection parameters, on each signal sent by a requesting terminal (UE) in an authorized access slot and representative of a preamble of a request to access said network associated with an authorized signature, which device is **characterized in that** said processing means (MT) are adapted, on receiving a signal requesting access to the network sent by a requesting terminal (UE), to determine a value for at least one detection parameter chosen as a function of at least one selected parameter representative of the radio environment of said requesting terminal so as to adapt the detection of said received signal dynamically as a function of the radio environment of said requesting terminal (UE).

2. A device according to claim 1, **characterized in that** said environment parameter is selected from a group comprising the estimated speed of the requesting terminal (UE), an average speed of mobile terminals in the cell in which said requesting terminal (UE) is situated, a Doppler effect associated with the signal sent by the requesting terminal (UE), a multipath amplitude, a multipath phase, and the type of environment in a cell (C) managed by a base station (Node B) of said network.

3. A device according to claim 1 or claim 2, **characterized in that** said processing means (MT) comprise detection means (MD) adapted to estimate the value of each selected environment parameter.

4. A device according to claim 1 or claim 2, **characterized in that** it comprises detection means (MD) coupled to said processing means (MT) and adapted to estimate the value of each selected environment parameter.

5. A device according to claim 3 or claim 4, **characterized in that** said detection means (MD) are adapted to analyze said received signal to estimate the speed of the requesting terminal (UE).

6. A device according to any one of claims 3 to 5, **characterized in that** said detection means (MD) are adapted to deduce at least one selected environment parameter from information data and/or dedicated signals sent by said requesting terminal (UE).

7. A device according to any one of claims 3 to 5, **characterized in that** said detection means (MD) are adapted to deduce at least one selected environment parameter from information data and/or dedicated signals sent by terminals in the cell in which said requesting terminal (UE) is situated.

8. A device according to claim 7, **characterized in that** said selected environment parameter is the average speed of the mobile terminals in the cell in which said requesting terminal (UE) is situated.

9. A device according to any one of claims 1 to 8, **characterized in that** said processing means (MT) are adapted to effect said preamble detection for each signature: i) by correlating each signal received, for each of said authorized access slots, to preamble codes corresponding to each of the authorized signatures, ii) by calculating, at each preamble reception candidate time, an energy associated with each processing segment whose number is at least equal to 1 and constitutes a detection parameter, and iii) by then calculating at each candidate time the sum of said calculated segment energies and comparing that energy sum, associated with a time within an analysis time window, to a selected threshold forming another detection parameter, so as to decide that the received preamble has been detected, with the associated signature and access slot, if said energy sum has a value above said threshold, within said analysis time window concerned.

10. A device according to any one of claims 1 to 8, **characterized in that** said processing means (MT) are adapted to effect said preamble detection for each signature: i) by correlating each signal received, for each of said authorized access slots, to preamble codes corresponding to each of the authorized signatures, ii) by calculating, at each preamble reception candidate time, an energy associated with each processing segment whose number is at least equal to 1 and constitutes a detection parameter, iii) by then calculating at each candidate time the sum of said calculated, segment energies, iv) by then determining a maximum of said energy sums within an analysis time window, and v) by comparing said determined energy maximum to a selected threshold forming another detection parameter, the preamble being considered as having been detected, with the associated signature and time slot, if said corresponding determined maximum energy is above said threshold.

11. A device according to claim 9 or claim 10, **characterized in that** said number of segments is adaptable.

**12.** A device according to any one of claims 9 to 11, **characterized in that** said threshold is adaptable.

**13.** A device according to any one of claims 1 to 12, **characterized in that** it comprises a memory (M) in which is stored a table of the correspondences between environment parameter values and detection parameter values and **in that** said processing means (MT) are adapted to determine each detection parameter value to be used by comparing each determined environment parameter value and at least one selected set of environment parameter values stored in said correspondence table.

**14.** A device according to any one of claims 5 to 10 in conjunction with claims 11 to 13, **characterized in that** said memory (M) stores a table of the correspondences between speed range values, number of segment values, and threshold values.

**15.** A device according to either claim 13 or claim 14, **characterized in that** said memory (M) is adapted to be supplied with environment parameter values and associated detection parameter values by a controller (RNC) of said network.

**16.** A device according to any one of claims 1 to 15, **characterized in that** said processing means (MT) are adapted to receive from a controller (RNC) of said network detection parameter values corresponding to a plurality of values of at least one environment parameter.

**17.** A device according to any one of claims 1 to 16, **characterized in that** it comprises configuration means (MCG) adapted to supply to said processing means (MT) detection parameter values corresponding to different values of at least one environment parameter.

**18.** A base station (Node B) for a cellular communications network, **characterized in that** it comprises a processing device (D) according to any one of the preceding claims.

**19.** A controller (RNC) for a cellular communications network, **characterized in that** it comprises a processing device (D) according to any one of claims 1 to 17.

**20.** An operation and maintenance center (OMC) for a cellular communications network, **characterized in that** it comprises at least means (MCG) for configuring a processing device (D) according to any one of claims 1 to 17.


**Patentansprüche**

**1.** Vorrichtung zur Signalverarbeitung (D) für ein zellulares Mobilfunknetz, wobei die genannte Vorrichtung (D) Verarbeitungsmittel (MT) umfasst, die entsprechend ausgeführt sind, um eine Präambeldetektion bei jedem Signal durchzuführen, das von einem anfordernden Endgerät (UE) in einem freigegebenen Zugriffs-Zeitschlitz übertragen wird und für die Präambel einer Zugriffsanforderung für das genannte Netz, die einer freigegebenen Signatur zugeordnet ist, repräsentativ ist, und zwar in Abhängigkeit von Detektionsparametern, **dadurch gekennzeichnet, dass** die genannten Verarbeitungsmittel (MT) entsprechend ausgeführt sind, dass sie beim Empfang eines Signals mit einer Zugriffsanforderung für das Netz, die von einem anfordernden Endgerät (UE) übertragen wird, einen Nutzungswert für mindestens einen Detektionsparameter festlegen, der in Abhängigkeit von dem Wert mindestens eines gewählten Parameters ausgewählt wird, der für die Funkumgebung des genannten anfordernden Endgeräts repräsentativ ist, um die Detektion des genannten empfangenen Signals in Abhängigkeit von der Funkumgebung des genannten anfordernden Endgeräts (UE) dynamisch anzupassen.

**2.** Vorrichtung gemäß Anspruch 1, **dadurch gekennzeichnet, dass** der genannte Umgebungsparameter aus einer Gruppe ausgewählt wird, die die geschätzte Geschwindigkeit des anfordernden Endgeräts (UE) die durchschnittliche Geschwindigkeit der mobilen Endgeräte, die in der Zelle angeordnet sind, in der sich das genannte anfordernde Endgerät (UE) befindet, den Doppler-Effekt, der dem von dem anfordernden Endgerät (UE) übertragenen Signal zugeordnet ist, die Amplitude der Mehrfachwege, die Phase der Mehrfachwege und den Umgebungstyp einer Zelle (C), die von einer Basisstation (Node B) des genannten Netzes verwaltet wird, umfasst.

**3.** Vorrichtung gemäß einem der Ansprüche 1 und 2, **dadurch gekennzeichnet, dass** die genannten Verarbeitungsmittel (MT) Detektionsmittel (MD) umfassen, die entsprechend ausgeführt sind, um den Wert jedes gewählten Umgebungsparameters zu bewerten.

4. Vorrichtung gemäß einem der Ansprüche 1 und 2, **dadurch gekennzeichnet, dass** sie Detektionsmittel (MD) umfasst, die mit den genannten Verarbeitungsmitteln (MT) gekoppelt und entsprechend ausgeführt sind, um den Wert jedes gewählten Umgebungsparameters zu bewerten.

5. vorrichtung gemäß einem der Ansprüche 3 und 4, **dadurch gekennzeichnet, dass** die genannten Detektionsmittel (MD) entsprechend ausgeführt sind, um das genannte empfangene Signal zu analysieren, um den Wert der Geschwindigkeit des anfordernden Endgeräts (UE) zu bewerten.

6. Vorrichtung gemäß einem der Ansprüche 3 bis 5, **dadurch gekennzeichnet, dass** die genannten Detektionsmittel (MD) entsprechend ausgeführt sind, um aus den Informationsdaten und/oder den von dem genannten anfordernden Endgerät (UE) übertragenen dedizierten Signalen den. Wert mindestens eines gewählten Umgebungsparameters abzuleiten.

7. Vorrichtung gemäß einem der Ansprüche 3 bis 5, **dadurch gekennzeichnet, dass** die genannten Detektionsmittel 1 (MD) entsprechend ausgeführt sind, um aus den Informationsdaten und/oder den von den Endgeräten, die in der Zelle angeordnet sind, in der sich das genannte anfordernde Endgerät (UE) befindet, übertragenen dedizierten Signalen den Wert mindestens eines gewählten Umgebungsparameters abzuleiten.

8. Vorrichtung gemäß Anspruch 7, **dadurch gekennzeichnet, dass** es sich bei dem genannten gewählten Umgebungsparameter um die durchschnittliche Geschwindigkeit der mobilen Endgeräte handelt, die in der Zelle angeordnet sind, in der sich das genannte anfordernde Endgerät (UE) befindet.

9. Vorrichtung gemäß einem der Ansprüche 1 bis 8, **dadurch gekennzeichnet, dass** die genannten Verarbeitungsmittel (MT) entsprechend ausgeführt sind, um die genannte Detektion für jede Signatur durchzuführen, und zwar i) durch Korrelation jedes empfangenen Signals für jeden der genannten freigegebenen Zugriffs-Zeitschlitze mit so genannten Präambel-Codes, die jeder der freigegebenen Signaturen entsprechen, ii) durch Berechnung, für jeden Zeitpunkt, der für den Empfang einer Präambel infrage kommt, der Energie, die jedem Verarbeitungssegment zugeordnet ist, dessen Anzahl mindestens gleich eins beträgt und das einen Detektionsparameter darstellt, sowie iii) durch Berechnung, für jeden infrage kommenden Zeitpunkt, der Summe der genannten berechneten Segmentenergien und durch Vergleich dieser Energiesumme, die einem Zeitpunkt innerhalb eines Analysezeitfensters zugeordnet ist, mit einem gewählten Grenzwert, der einen weiteren Detektionsparameter darstellt, um zu entscheiden, ob die empfangene Präambel mit der zugeordneten. Signatur und dem Zugriffs-Zeitschlitz erfasst wurde, wenn die genannte Energiesumme innerhalb des genannten betreffenden Analyse-Zeitfensters einen Wert über dem genannten Grenzwert aufweist.

10. Vorrichtung gemäß einem der Ansprüche 1 bis 8, **dadurch gekennzeichnet, dass** die genannten Verarbeitungsmittel (MT) entsprechend ausgeführt sind, am die genannte Detektion für jede Signatur durchzuführen, und zwar i) durch Korrelation jedes empfangenen Signals, für jeden der genannten freigegebenen Zugriffs-Zeitschlitze, mit so genannten Präambel-Codes, die jeder der freigegebenen Signaturen entsprechen, ii) durch Berechnung, für jeden für den Empfang einer Präambel infrage kommenden Zeitpunkt, der Energie, die jedem Verarbeitungssegment zugeordnet ist, dessen Anzahl mindestens gleich eins beträgt und das einen Detektionsparameter darstellt, sowie iii) durch Berechnung, für jeden infrage kommenden Zeitpunkt, der Summe der genannten berechneten Energien der genannten Segmente und schließlich iv) durch Festlegung eines Maximums für die genannten Energiesummen innerhalb eines Analyse-Zeitfensters und v) durch Vergleich des genannten festgelegten Energiemaximums mit einem gewählten Grenzwert, der einen weiteren Detektionsparameter darstellt, wobei die Präambel als erfasst betrachtet wird, mit der zugeordneten Signatur und dem Zugriffs-Zeitschlitz, wenn das genannte festgelegte Energiemaximum über dem genannten Grenzwert liegt.

11. Vorrichtung gemäß einem der Ansprüche 9 und 10, **dadurch gekennzeichnet, dass** die genannte Anzahl an Segmenten anpassungsfähig ist.

12. Vorrichtung gemäß einem der Ansprüche 9 bis 11, **dadurch gekennzeichnet, dass** der genannte Grenzwert anpassungsfähig ist.

13. Vorrichtung gemäß einem der Ansprüche 1 bis 12, **dadurch gekennzeichnet, dass** sie einen Speicher (M) umfasst, in dem eine Zuordnungstabelle zwischen den Werten für die Umgebungsparameter und den Werten für die Detektionsparameter gespeichert ist, sowie dadurch, dass die genannten Verarbeitungsmittel (MT) entsprechend ausgeführt sind, um jeden einzusetzenden Detektionsparameter-Wert durch, den Vergleich zwischen jedem festgelegten Umgebungsparameter-Wert und mindestens einer gewählten Einheit von umgebungsparameter-Werten zu ermitteln, die in der genannten Zuordnungstabelle gespeichert sind.

14. Vorrichtung gemäß einem der Ansprüche 5 bis 10, in Kombination mit den Ansprüchen 11 bis 13, **dadurch gekennzeichnet, dass** der genannte Speicher (M) eine Zuordnungstabelle zumindest zwischen den Werten für die Geschwindigkeitsintervalle, den Werte für die Segmentanzahl und den Grenzwerten beinhaltet.

15. Vorrichtung gemäß einem, der Ansprüche 13 und 14, **dadurch gekennzeichnet, dass** in dem genannten Speicher (M) Werte für die Umgebungsparameter und werte für die Detektiohsparameter gespeichert werden können, die von einer Steuereinrichtung (RNC) des genannten Netzes zugeordnet werden.

16. Vorrichtung gemäß, einem der Ansprüche 1 bis 15, **dadurch gekennzeichnet, dass** die genannten Verarbeitungsmittel (MT) entsprechend ausgeführt sind, um von der Steuereinrichtung (RNC) des genannten Netzes Werte für die Detektionsparameter zu empfangen, die mehreren Werten für mindestens einen Umgebungsparameter entsprechen.

17. Vorrichtung gemäß einem der Ansprüche 1 bis 16, **dadurch gekennzeichnet, dass** sie Konfigurationsmittel (MCG) umfasst die entsprechend ausgeführt sind, um den genannten Verarbeitungsmitteln (MT) Werte für die Detektionsparameter zu liefern, die verschiedenen Werten für mindestens einen Umgebungsparameter entsprechen.

18. Basisstation (Node B) für ein zellulares Mobilfunknetz, **dadurch gekennzeichnet, dass** sie eine Verarbeitungsvorrichtung (D) gemäß einem der vorgenannten Ansprüche umfasst.

19. Steuereinrichtung (RNC) für ein zellulares Mobilfunknetz, **dadurch gekennzeichnet, dass** sie eine Verarbeitungsvorrichtung (D) gemäß einem der Ansprüche 1 bis 17 umfasst.

20. Betriebs- und Wartungszentrum (OMC) für ein zellulares Mobilfunknetz, **dadurch gekennzeichnet, dass** es mindestens Konfigurationsmittel (MCG) einer Verarbeitungsvorrichtung (D) gemäß einem der Ansprüche 1 bis 17 umfasst.

C1

UE

UE

M

M

D

MT

Node B1

CN

UE

C2

RNC1

MCG

RNC2

OMC

M

M

D

MT

Node B2

Figure unique

**EP 1 558 053 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010026543 A